# FASCICULE DE BREVET EUROPEEN

(11) **EP 2 438 790 B1**
(45) Date de publication et mention de la délivrance du brevet: **26.02.2020**
(21) Numéro de dépôt: 10720286.3
(22) Date de dépôt: 30.04.2010
(51) Int. Cl.: H04B 7/185, H04W 84/06, H04W 84/18

(54) **RÉSEAU SANS FIL D'IDENTIFICATION ET D'INVESTIGATION POUR ÉQUIPEMENTS SPATIAUX**
DRAHTLOSE IDENTIFIKATION UND FORSCHUNGSNETZWERK FÜR WELTRAUMEINRICHTUNGEN
WIRELESS IDENTIFICATION AND RESEARCH NETWORK FOR SPACE DEVICES

(30) Priorité: 05.06.2009 FR 0902730
(43) Date de publication de la demande: 11.04.2012
(73) Titulaire: THALES, 92400 Courbevoie (FR)
(72) Inventeur: GUYOT, Philippe, F-06530 Le Tignet (FR); BAINIER, Christian, F-94117 Arcueil Cedex (FR)
(74) Mandataire: Esselin, Sophie
(86) Numéro de dépôt international: PCT/EP2010/055926
(87) Numéro de publication internationale: WO 2010/139513

(56) Documents cités:
- EP-A2- 1 032 142
- WO-A1-2009/001122
- US-A1- 2007 049 195
- SATISH SHARMA ET AL: "Wireless Telecommand and Telemetry System for Satellite" RECENT ADVANCES IN SPACE TECHNOLOGIES, 2007. RAST '07. 3RD INTERN ATIONAL CONFERENCE ON, IEEE, PI, 1 juin 2007 (2007-06-01), pages 551-555, XP031123363 ISBN: 978-1-4244-1056-9
- VLADIMIROVA T ET AL: "Characterising Wireless Sensor Motes for Space Applications" ADAPTIVE HARDWARE AND SYSTEMS, 2007. AHS 2007. SECOND NASA/ESA CONFERENCE ON, IEEE, PISCATAWAY, NJ, USA, 5 août 2007 (2007-08-05), pages 43-50, XP031464143 ISBN: 978-0-7695-2866-3

## Description

La présente invention concerne l'observabilité d'équipements destinés à être intégrés à des satellites.

L'objet de l'invention est de proposer une solution technique simple et robuste au problème de l'observabilité d'équipements destinés à être intégrés à des satellites. Grâce à l'invention, cette observabilité est rendue possible durant tout le cycle de vie des équipements, depuis leur fabrication jusqu'à leur mise en œuvre dans l'espace.

L'invention est particulièrement bien adaptée à une application dans le domaine des constellations de satellites car elle permet de simplifier et de rationaliser le traitement des données, principalement en phases d'assemblage et de tests.

De façon générale, lorsqu'une anomalie est détectée sur un équipement, la procédure à suivre comprend deux étapes principales :
- l'accès à des informations relatives à ce que l'équipement concerné par l'anomalie « a vu » au moment où l'anomalie s'est déclarée ;
- l'application d'un programme de tests en vue de comprendre les causes de l'anomalie constatée.

Les moyens connus pour tenter de mener à bien ces étapes d'investigation manquent de flexibilité ; de plus, ils sont difficiles à mettre en œuvre et coûteux. Par ailleurs, ils nécessitent généralement de démonter des équipements assemblés ou d'introduire des appareillages dans le système global comprenant l'équipement concerné par l'anomalie. De telles interventions, souvent lourdes, nécessitent en outre des agréments, potentiellement longs à obtenir, autorisant l'intervention.

En effet, aujourd'hui, lorsque des investigations sont menées, sur un satellite au moins partiellement assemblé, en vue de déterminer les causes d'une anomalie survenue sur un équipement, il est nécessaire de communiquer avec le ou les équipements concernés, à l'intérieur du satellite, depuis des moyens de communication « sol », par l'intermédiaire :
- d'interfaces électriques du ou des équipements concernés, en mode nominal, dit mode conduit ;
- de moyens de communication radiofréquences, en liens montant et descendant, généralement en bande S ou en bande Ku, en mode nominale, dit mode RF (pour radiofréquence) ;
- d'appareils, ou « boîtes éclatées », permettant le prélèvement et l'analyse d'un signal analogique en un point quelconque de l'équipement, en mode anomalie.

Par ailleurs, des signaux numériques peuvent, sous certaines conditions, être prélevés et analysés grâce à des capteurs basés sur le principe d'une boucle de Hertz.

Les documents US2007049195 A1 et WO2009001122 A1 fournissent des enseignements utiles à la compréhension du contexte de l'invention telle que définie par les revendications. La complexité, le manque de souplesse, les délais nécessaires pour une investigation complète, et les coûts de ces moyens connus permettant la recherche des causes d'une anomalie détectée sur un équipement sont incompatibles avec le caractère « temps réel » et les objectifs de simplicité, de robustesse et de discrétion souhaités pour de telles applications : ils constituent donc autant de défauts que la présente invention cherche à résoudre.

La présente invention est par conséquent basée sur l'idée d'associer, depuis leur conception, aux équipements destinés à être intégrés à un satellite, des coupleurs intelligents dotés de moyens de communication sans fil. Un réseau sans fil embarqué est ainsi constitué et rendu accessible et commandable depuis un ordinateur portable lorsque le satellite est au sol en phase d'intégration ou de test. Lorsque le satellite est en vol, le réseau sans fil embarqué est nominalement désactivé. Ce ou ces coupleurs intelligents disposent par ailleurs d'une mémoire interne leur permettant de stocker des informations techniques relatives à l'équipement ou aux équipements auxquels ils sont associés. La mémoire interne de ces coupleurs intelligents est consultable en temps réel ou en différé, facilitant les investigations non intrusives en cas d'anomalie. Par ailleurs, la mémoire interne des coupleurs héberge également des fonctions d'autotests des équipements, exécutables à distance.

L'invention est définie par les revendications.

Ainsi, l'invention a pour objet un système de réseau sans fil évolutif et évanescent pour équipements spatiaux intégrés dans un satellite ou destinés à l'être, comprenant :
- un ensemble de coupleurs intelligents intégrés auxdits équipements spatiaux dès leur fabrication ou utilisés de manière autonome au sein d'un satellite, lesdits coupleurs intelligents comportant des blocs de communication sans fil internes et externes, constituant un réseau sans fil évolutif, formant, au sol, au niveau de chaque équipement spatial, un réseau dit « réparti », puis un réseau dit « embarqué » après intégration finale du satellite,
- au moins un ordinateur, pouvant être un ordinateur portable, équipé d'une carte de communication sans fil, pouvant se connecter audit réseau sans fil évolutif,
- au moins un logiciel installé sur ledit ordinateur, permettant :
   ∘ l'accès isolé à un quelconque équipement spatial, en vue au moins de recueillir des informations relatives au bon fonctionnement dudit équipement spatial.
   ∘ l'accès au réseau sans fil embarqué, en vue au moins de recueillir des informations relatives au fonctionnement desdits équipements spatiaux, de façon non intrusive.
Dans le système selon l'invention, les coupleurs intelligents comprennent un processeur, une mémoire interne, un circuit d'émission / réception et au moins une antenne haute fréquence, ladite mémoire interne desdits coupleurs intelligents comprenant par ailleurs des moyens pour assurer, par l'intermédiaire d'une programmation adaptée, l'une au moins des fonctions suivantes :
- l'enregistrement automatique de paramètres relatifs au fonctionnement des équipements spatiaux auxquels ils sont associés,
- le stockage de données techniques relatives aux équipements spatiaux auxquels lesdits coupleurs intelligents sont associés,
- le stockage de procédures d'autotests relatives aux équipements spatiaux auxquels lesdits coupleurs intelligents sont associés, exécutables à distance.

Dans le système selon l'invention, avantageusement, ledit satellite comprenant des moyens de communications nominaux sol / bord et ledit satellite étant en vol, le réseau sans fil embarqué peut être configuré pour communiquer avec l'ordinateur situé au sol par l'intermédiaire notamment des moyens de communication nominaux du satellite.
Dans le système selon l'invention, ledit réseau sans fil embarqué comprend des moyens pour l'activer et le désactiver électriquement.
Dans le système selon l'invention, ledit réseau sans fil embarqué comprend des moyens pour l'activer et le désactiver à distance, lesdits équipements spatiaux étant au sol au sein d'un satellite, par exemple en phase de test.
Dans le système selon l'invention, ledit réseau sans fil embarqué comprend des moyens pour l'activer et le désactiver à distance, lesdits équipements spatiaux étant en vol au sein d'un satellite en orbite.

Avantageusement, le système selon l'invention comprend des moyens pour assurer l'une au moins des fonctions suivantes :
- l'aide à la détermination de l'état de chacun desdits équipements spatiaux,
- la mise à jour, chacun desdits équipements spatiaux présentant un procès verbal de recette, desdits procès verbaux de recettes,
- l'acquisition et l'enregistrement de pannes, alarmes ou événements survenus sur lesdits équipements spatiaux,
- le lancement de procédures d'autotests à distance sur lesdits équipements spatiaux,
- la lecture de données techniques relatives auxdits équipements spatiaux,
- la lecture de paramètres relatifs auxdits équipements spatiaux, enregistrés automatiquement,
- l'acquisition en temps réel de paramètres sur un ou des bus de données associés auxdits équipements spatiaux,
- l'aide au diagnostic en cas de dysfonctionnement d'un des équipements spatiaux au sol,
- l'aide au diagnostic en cas de dysfonctionnement d'un des équipements spatiaux en vol.

Avantageusement, le réseau sans fil embarqué présente une topologie comprenant des nœuds internes correspondant aux blocs de communication sans fil internes, et des nœuds d'interface, correspondant aux blocs de communication sans fil externes, lesdits nœuds internes et lesdits nœuds d'interface étant par conséquent associés aux coupleurs intelligents internes et externes, et lesdits nœuds d'interface permettant la communication entre lesdits nœuds internes et au moins un nœud externe, fixe ou mobile par rapport auxdits nœuds internes, ledit nœud externe correspondant audit ordinateur, qui peut être un ordinateur portable.
Le réseau sans fil embarqué selon l'invention peut comprendre des moyens pour assurer la fonction de bus de données opérationnel.
Le réseau sans fil embarqué selon l'invention peut présenter un mode de fonctionnement dans lequel le réseau sans fil embarqué constitue un bus de données évanescent ne pouvant pas être activé en vol.
Le réseau sans fil embarqué selon l'invention peut présenter un mode de fonctionnement dans lequel le réseau sans fil embarqué constitue un bus de données opérationnel, nécessaire au fonctionnement du satellite ou redondant.

Le réseau sans fil embarqué selon l'invention peut présenter un mode de fonctionnement dans lequel le réseau sans fil embarqué constitue un bus de données évanescent comprenant des moyens pour l'activer en vol à des fins d'aide au diagnostic, notamment en cas de dysfonctionnement d'un des équipements spatiaux.
Le réseau sans fil embarqué selon l'invention peut présenter un mode de fonctionnement dans lequel le réseau sans fil embarqué constitue un bus de données réel, nécessaire au fonctionnement du satellite ou redondant.
Le réseau sans fil embarqué selon l'invention peut présenter un mode de fonctionnement dans lequel le réseau sans fil embarqué constitue un bus de données évanescent comprenant des moyens pour l'activer en vol à des fins d'aide au diagnostic en cas de dysfonctionnement d'un des équipements spatiaux.

D'autres caractéristiques et avantages de l'invention apparaîtront à l'aide de la description qui suit faite en regard des dessins annexés qui représentent :
- la figure 1 : un exemple de satellite au sol comportant des ports d'entrée pour coupleurs intelligents dotés de blocs de communication sans fil vers le monde extérieur, selon l'invention ;
- la figure 2 : le schéma d'un exemple de moyen de fixation d'un port d'entrée de moyens de communications sans fil à la paroi d'un satellite ;
- la figure 3 : le schéma d'un exemple d'implémentation d'un réseau sans fil embarqué selon l'invetion ;
- la figure 4 : le schéma d'un exemple de « topologie réseau » d'un système selon l'invention.

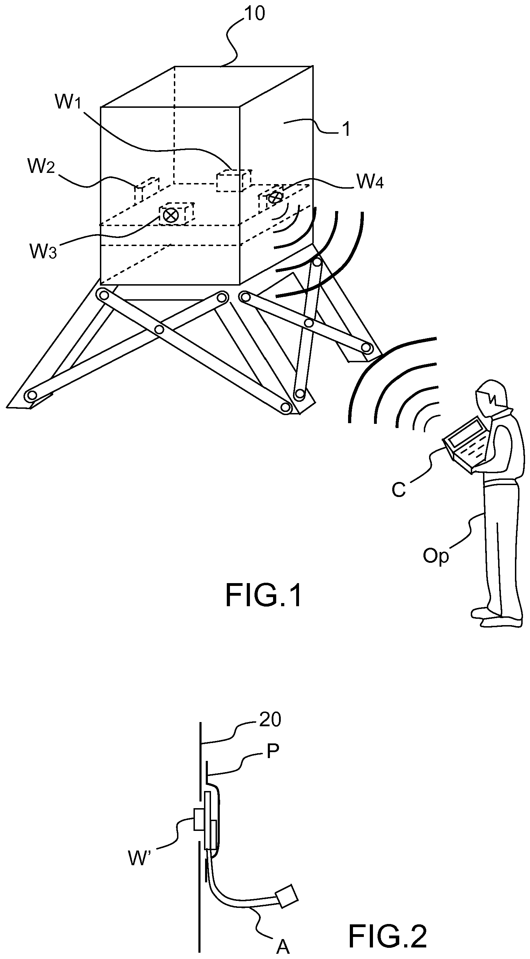

La figure 1 présente un exemple de satellite 1, pouvant se trouver en phase d'assemblage ou de tests au sol, et comprenant des blocs de communication sans fil W1, W2, W3, W4 associés à des coupleurs intelligents permettant un échange des informations de façon non intrusive, c'est-à-dire sans démontage d'équipement et sans perturbation du système global, entre ledit satellite 1 et un opérateur Op équipé d'un ordinateur C, disposant lui-même d'une carte de communication sans fil de type WPAN par exemple (pour Wireless Personal Area Network selon l'acronyme anglais). Les blocs de communication sans fil W1, W2, W3, W4 sont généralement principalement constitués d'une antenne radiofréquence miniature, comme cela est décrit à la figure 2. Par ailleurs, l'ordinateur C de l'opérateur Op est de préférence un ordinateur portable.

Les coupleurs intelligents, généralement situés au cœur du satellite 1, au sein des différents équipements spatiaux, sont constitués des éléments suivants :
- un processeur associé à une unité de stockage, ou mémoire interne ;
- un circuit d'émission / réception ;
- une antenne radiofréquence.

L'ordinateur C comprend un logiciel pouvant accéder au réseau sans fil embarqué par l'intermédiaire de la carte de communication sans fil, et permettant de remplir l'une au moins des fonctions suivantes, comme vu précédemment :
- l'aide à la détermination de l'état de chacun desdits équipements spatiaux,
- la mise à jour, chacun desdits équipements spatiaux présentant un procès verbal de recette, desdits procès verbaux de recettes,
- l'acquisition et l'enregistrement de pannes, alarmes ou événements survenus sur lesdits équipements spatiaux,
- le lancement de procédures d'autotests à distance sur lesdits équipements spatiaux,
- la lecture de données techniques relatives auxdits équipements spatiaux,
- la lecture de paramètres relatifs auxdits équipements spatiaux, enregistrés automatiquement,
- l'acquisition en temps réel de paramètres sur un ou des bus de données associés auxdits équipements spatiaux,
- l'aide au diagnostique en cas de dysfonctionnement d'un des équipements spatiaux au sol,
- l'aide au diagnostique en cas de dysfonctionnement d'un des équipements spatiaux en vol.

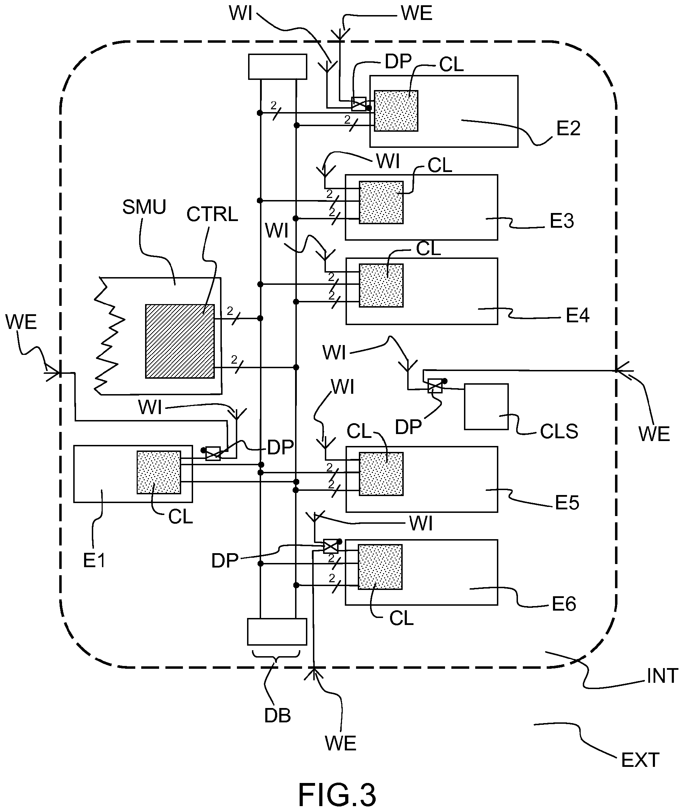

Le réseau sans fil embarqué, dans le système selon l'invention, est conçu pour être le plus faiblement intrusif possible. En utilisation au sol, il peut être désactivé électriquement à tout moment. De plus, il n'agit qu'en mode échange de données avec le bus de données associé à l'équipement auquel ledit coupleur est connecté. Enfin, le réseau sans fil embarqué peut être configuré de telle manière qu'il ne puisse agir qu'en mode acquisition de données, lues sur ledit bus de données.
En vol, le système selon l'invention, en particulier le réseau sans fil embarqué, est de préférence désactivé. Cependant, si besoin, il peut être configuré de manière à ce qu'il puisse être activé à distance en utilisant les liens de communications du satellite. Selon le niveau d'observabilité recherché, l'activation du réseau sans fil embarqué peut être limitée.
Un opérateur Op peut alors, par l'intermédiaire d'un ordinateur C équipé de moyens de communication sans fil et d'un logiciel adapté, se connecter audit réseau sans fil embarqué afin d'accéder à des données enregistrées dans la mémoire des coupleurs intelligents associés aux équipements du satellite 1, ou lire des données directement sur les bus de données du satellite 1. De façon optionnelle, le réseau sans fil embarqué peut, en cas de nécessité, assurer la fonction de bus de données opérationnel, actif ou redondant.
Comme cela a été mentionné plus haut, la fonction principale du système selon l'invention est d'aider à réaliser un diagnostique, c'est-à-dire d'aider à déterminer les causes d'une anomalie. Cette activité est couramment désignée sous l'appellation anglo-saxonne de « trouble-shooting ». Dans ce contexte, le système selon l'invention permet à l'opérateur Op de lire des données, soit directement sur un bus de données, soit dans la mémoire interne des coupleurs intelligents. De nombreux paramètres peuvent ainsi être consultés, soit par accès direct, soit parce qu'ils ont été stockés. Il est en effet possible d'enregistrer en continu dans la mémoire interne des coupleurs des paramètres tels que la fréquence d'une horloge interne par exemple, c'est-à-dire des paramètres qui ne sont pas forcément liés à la fonction de l'équipement présentant une anomalie sur laquelle l'opérateur Op mène une analyse. L'objectif est de rendre possible l'accès à ce que l'équipement présentant une anomalie « a vu » au plus près possible de l'apparition de ladite anomalie. Sur la figure 1, quatre blocs de communications sans fil W1 à W4 situés à l'interface entre l'intérieur et l'extérieur du satellite 1 sont représentés. Selon l'invention, des coupleurs intelligents associés notamment à ces blocs de communication sans fil, lesdits coupleurs intelligents n'étant pas représentés sur la figure 1 mais schématisés sur la figure 3, sont disposés au cœur du satellite 1, au sein des équipements spatiaux. Ainsi, ces coupleurs intelligents intégrés peuvent communiquer avec l'un au moins des blocs de communication sans fil W1 à W4, situés à l'interface entre l'intérieur et l'extérieur du satellite 1.
Ensuite, en fonction de sa position autour du satellite, l'opérateur Op équipé de l'ordinateur, portable, C interroge le réseau sans fil embarqué par un lien de communication passant par le bloc de communication sans fil W1, W2, W3 ou W4 le mieux placé. Dans l'exemple non limitatif de la figure 1, on a positionné un bloc de communication sans fil sur chacune des faces du satellite 1 de sorte que le réseau sans fil embarqué est accessible à l'opérateur Op quel que soit sa position autour du satellite 1. Cette configuration n'est cependant pas obligatoire : on peut se contenter d'un seul bloc de communication sans fil W1 par exemple.

La figure 2 est un schéma montrant un exemple de mise en place d'un bloc de communication sans fil W', constituant un port d'entrée « air » au niveau du film de protection adiabatique 20 d'un satellite 1. Ledit film de protection adiabatique 20 du satellite 1 est communément appelé MLI (pour Multi-Layer Insulator) ; il assure une fonction d'isolation thermique bilatérale. Dans cet exemple, une poche P en film MLI est rapportée et cousue sur le film de protection adiabatique 20 qui recouvre le satellite 1. Un bloc de communication sans fil W' est placé dans ladite poche P. Le bloc de communication sans fil W' comporte une antenne radiofréquence miniature A et constitue un moyen de communication sans fil.
Ladite poche P permet, à l'exception du trou de passage du câble coaxial de l'antenne radiofréquence miniature A, de conserver l'intégrité de l'isolation thermique.

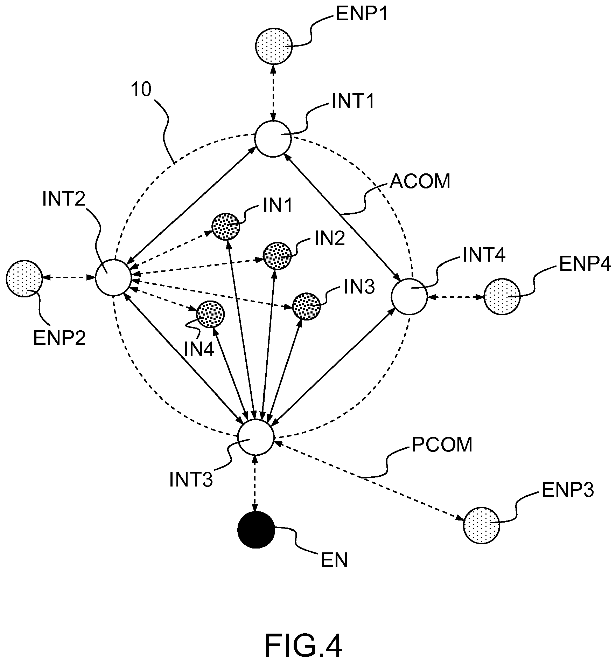

La figure 3 représente schématiquement un exemple de système mettant en œuvre l'invention. Le « monde intérieur » INT, correspondant à l'intérieur d'un satellite, comprend un certain nombre d'équipements E1, E2, E3, E4, E5, E6, dans lesquels sont intégrés des coupleurs intelligents CL.
En outre, les équipements E1, E2, E6, qui se trouvent à proximité immédiate des parois du satellite, sont respectivement associés aux nœuds de communication INT1, INT2, INT3 de la figure 4. Lesdits équipements E1, E2, E6 sont associés à un bloc de communication sans fil extérieur WE et à un bloc de communication sans fil intérieur WI, couplées à l'aide d'un diviseur passif DP. Dans la mesure où une paroi quelconque du satellite ne serait pas desservie par un équipement, un coupleur intelligent seul CLS muni desdites antennes WE et WI peut faire office de nœud de communication INT4 pour lesdits équipements, comme sur la figure 4.
Comme pour tout satellite classique, le « monde intérieur » INT de la figure 3 comporte également des bus de données physiques DB permettant l'échange de données entre les différents équipements E1 à E6. Par ailleurs, l'unité de contrôle SMU (System Management Unit en anglais) contient un contrôleur de bus CTRL (Data Bus Contrôler en anglais) et supervise le fonctionnement du satellite. Enfin, le « monde intérieur » INT, par l'intermédiaire des blocs de communication sans fil WI, WE, permet à un utilisateur appartenant au « monde extérieur » EXT d'accéder aux bus de données DB et aux équipements E1 à E6 via les coupleurs intelligents CL ou CLS. Lesdits coupleurs intelligents CL ou CLS sont en effet respectivement connectés à l'un au moins des équipements E1 à E6 et sont adaptés pour échangés des informations, en entrée et / ou en sortie, avec lesdits équipements E1 à E6. L'invention réside en particulier dans le fait que les coupleurs intelligents CL ou CLS sont associés à, ou comprennent, des moyens ou blocs de communication sans fil WE et WI. Ces moyens de communication sans fil WE, WI peuvent être de type Zigbee ou Wifi. Il est également possible que les uns, par exemple les blocs de communication sans fil WI du « monde intérieur » INT soient de type Zigbee tandis que les blocs de communication sans fil WE, constituant une interface de communication avec le « monde extérieur » EXT, sont de type Wifi. Du point de vue du « monde intérieur » INT, les blocs de communication sans fil WI associés aux coupleurs intelligents CL ou CLS constituent un réseau sans fil embarqué interne au satellite. L'association des coupleurs intelligents CL ou CLS à des blocs de communication WE permettant la communication avec le « monde extérieur » rend possible l'accès au réseau sans fil embarqué interne au satellite par un utilisateur appartenant au « monde extérieur ». Comme le montre la figure 4, la création de ce réseau sans fil embarqué interne au satellite, et accessible depuis le « monde extérieur », présente deux principaux effets techniques : d'une part, cela constitue un moyen d'investigation non intrusif en cas de panne de l'un quelconque des équipements E1 à E6 ; d'autre part, le réseau sans fil embarqué interne au satellite constitue un bus de données évanescent qui, en dernier recours et en cas de dysfonctionnement des bus de données physiques DB, peut être utilisé comme bus de données.

Dans la figure 4, on présente un exemple de topologie d'un réseau de communication sans fil issu de la mise en œuvre du système selon l'invention. Des coupleurs intelligents associés à des blocs de communication sans fil sont disposés à l'intérieur de l'enceinte 10 du satellite, dans les équipements eux-mêmes. Ces coupleurs placés au cœur du satellite, et associés à des blocs de communication sans fil, constituent des nœuds de communication interne IN1, IN2, IN3, IN4. D'autres coupleurs dotés de blocs de communication sans fil sont positionnés dans des équipements situés en périphérie de l'enceinte 10 du satellite. Ils constituent des nœuds de communication INT1, INT2, INT3, INT4 à l'interface entre l'intérieur du satellite, le « monde intérieur », et l'extérieur du satellite, le « monde extérieur ». Ces nœuds de communication d'interface INT1 à INT4 sont ici répartis de façon à ce que le réseau sans fil embarqué soit accessible sur 360° autour du satellite. De cette manière, des nœuds de communication externes potentiels ENP1, ENP2, ENP3, ENP4, mobiles ou fixes, peuvent accéder au réseau sans fil embarqué. Ainsi, les liens de communication du type PCOM sur la figure 4 indiquent un lien de communication potentiel. Dans l'exemple représenté, l'opérateur équipé de son ordinateur doté d'une carte de communication sans fil constitue un nœud de communication externe actif EN. Ainsi, les liens de communication du type ACOM sur la figure 4 représentent des liens de communication actifs.
Comme le montre la figure 4, il est possible à un opérateur, via le nœud de communication externe EN, ou via un autre nœud de communication externe potentiel ENP1 à ENP4, d'accéder au réseau sans fil embarqué du satellite. Il peut passer par le nœud de communication d'interface INT3 situé à l'interface entre l'intérieur et l'extérieur du satellite. Ce nœud de communication INT3 correspond à l'un des blocs de communication sans fil WE de la figure 3 ; il est associé à l'un des coupleurs intelligents CL. Ledit nœud de communication d'interface INT3 accède via le réseau sans fil embarqué aux nœuds de communications internes IN1 à IN4. Ces nœuds de communication internes IN1 à IN4 correspondent aux blocs de communication internes WI du « monde intérieur » INT associés aux coupleurs intelligents CL, situés auprès des équipements E1 à E6, sur la figure 3. Par l'intermédiaire de ces nœuds de communication internes IN1 à IN4, l'opérateur accède donc à toutes les données dont il a besoin, soit par lecture de paramètres enregistrés, de manière automatique ou par programmation, dans la mémoire interne des coupleurs intelligents dont est équipé le satellite, soit par lecture de données techniques stockées sans la mémoire interne desdits coupleurs intelligents, soit par acquisition de paramètres directement sur les bus de données réels, DB sur la figure 3, du satellite. De cette manière, l'opérateur peut également exécuter à distance des fonctions d'autotests sur les équipements, en vue d'aider à l'élaboration d'un diagnostique en cas d'anomalie.
Comme cela a été exposé précédemment, cette fonction de « trouble-shooting » non intrusive, puisqu'elle ne nécessite notamment aucun démontage d'équipement ni aucune introduction d'appareils de mesure, peut dans tous les cas être très utile au sol, en phase d'assemblage d'un satellite ou en phase de test. En effet, tous les sous-ensembles, tous les équipements ayant été rendus « communiquant », par intégration de coupleurs intelligents dotés de moyens de communication sans fil, dès leur fabrication, il est possible de construire un réseau sans fil embarqué permanent, fonctionnel pendant toute la durée de vie du satellite. Par enregistrement de paramètres ou de résultats de tests dans la mémoire interne des coupleurs intelligents introduits au cœur du satellite, il est par ailleurs possible d'enrichir les données techniques et les paramètres disponibles au fur et à mesure des interventions réalisées. En vol, l'opérateur équipé de son ordinateur portable peut si besoin accéder, par l'intermédiaire des moyens de communication propres du satellite, au réseau sans fil embarqué préalablement activé ; cela peut constituer une aide ultime et précieuse au diagnostique en cas d'anomalie.
Enfin, comme cela a été vu précédemment, le réseau sans fil embarqué peut, en cas de nécessité, être utilisé comme bus de données en cas de panne des bus de données physiques.

En résumé, l'invention propose la mise en place d'un réseau sans fil embarqué au sein d'un satellite par l'intermédiaire de coupleurs intelligents dotés de moyens de communication sans fil. Le mode de communication sans fil utilisé peut reposer sur le protocole Zigbee / IEEE 802.15.4 de préférence. Cependant, d'autres protocoles de communication sans fil, par exemple le Wifi, pourraient également être utilisés. Ce réseau sans fil embarqué constitue un bus de données évanescent interne et faiblement intrusif. Un opérateur externe équipé d'un ordinateur portable doté d'une carte de communication sans fil et d'un logiciel adapté peut accéder à ce réseau sans fil embarqué afin d'acquérir des données techniques relatives aux équipements spatiaux intégrés. Cela peut être particulièrement utile à des fins d'aide au diagnostique en cas d'anomalie, d'autant qu'il est également possible, via ce lien, d'exécuter à distance sur les équipements du satellite des fonctions d'autotest. En outre, le bus de données évanescent interne peut constituer un bus de données réel utilisé en parallèle d'un bus de données opérationnel nominal ou redondant du satellite.
Ainsi, trois configurations sont possibles pour le bus évanescent interne constitué par le réseau sans fil embarqué dans le système selon l'invention. Il peut être complètement désactivé en vol. Dans ce cas, il n'est utile qu'au sol, en phases d'assemblage et de test notamment. Il peut être désactivé en vol mais activable à distance. Dans cette configuration, le réseau sans fil embarqué peut être activé à distance en cas d'anomalie en vue d'aider à l'élaboration d'un diagnostique. Enfin, il peut être totalement actif pendant tout le vol du satellite. Il est alors utilisé comme un bus de données opérationnel.
Enfin, l'accessibilité, de façon non intrusive, au réseau sans fil embarqué rend possible la mise en œuvre de fonctions de surveillance des bus de données, notamment en phase de test ou de mise au point.

Il est par ailleurs intéressant de noter que l'utilisation d'un réseau sans fil embarqué en tant que bus de données évanescent présente l'avantage de ne pas nécessiter de transport de courant électrique, ce qui peut permettre de résoudre simplement des problèmes techniques rencontrés dans les satellites actuels, liés à l'isolation galvanique, comme par exemple des problèmes de masse primaire et de masse secondaire.

## Revendications

1. Système de communication pour équipements spatiaux de satellite comprenant une pluralité d'équipements spatiaux (E1, E2, E3, E4, E5, E6) couplés à des bus de données physiques (DB) opérationnels pour des communications de données entre les équipements spatiaux pendant un mode opérationnel du satellite, chaque équipement spatial comprenant au moins un coupleur intelligent (CL, CLS) comportant des blocs de communication sans fil, ledit au moins un coupleur intelligent (CL, CLS) comprenant un processeur, une mémoire interne, un circuit d'émission / réception et au moins une antenne haute fréquence, ladite mémoire interne dudit coupleur intelligent (CL,CLS) comprenant par ailleurs des moyens de programmation adaptée pour :
• l'enregistrement automatique de paramètres relatifs au fonctionnement des équipements spatiaux auxquels ils sont associés,
• le stockage de données techniques relatives aux équipements spatiaux auxquels lesdits coupleurs intelligents (CL, CLS) sont associés,
• le stockage de procédures d'autotests relatives aux équipements spatiaux auxquels lesdits coupleurs intelligents (CL, CLS) sont associés, exécutables à distance,
le système étant **caractérisé en ce que** :
- le coupleur intelligent associé à chaque équipement communique, selon l'emplacement dudit équipement dans l'enceinte du satellite, soit avec des blocs de communication sans fil interne (WI) et externe (WE) pour les équipements qui sont à proximité immédiate d'une paroi du satellite, soit avec des blocs de communication sans fil interne (WI) pour les équipements qui sont au cœur du satellite;
- les blocs de communication sans fil interne (WI) et externe (WE) formant un réseau sans fil distinct des bus de données physiques opérationnels, ledit réseau sans fil étant activable ou désactivable pour opérer des fonctions de communication entre l'extérieur et l'intérieur du satellite pour faire du diagnostic au sol et en vol des équipements spatiaux ou opérer des fonctions de communication en interne du satellite pour communiquer en vol des données opérationnelles entre la pluralité des équipements spatiaux.

2. Système selon la revendication 1, comprenant :
• au moins un ordinateur (C), pouvant être un ordinateur portable, équipé d'une carte de communication sans fil, pouvant se connecter audit réseau sans fil,
• au moins un logiciel installé sur ledit ordinateur (C), permettant :
- l'accès isolé à un quelconque équipement spatial, en vue au moins de recueillir des informations relatives au bon fonctionnement dudit équipement spatial ; et
- l'accès au réseau sans fil, en vue au moins de recueillir des informations relatives au fonctionnement desdits équipements spatiaux, de façon non intrusive.

3. Système selon la revendication 2, ledit satellite (1) comprenant des moyens de communications nominaux sol / bord et ledit satellite (1) étant en vol, **caractérisé en ce que** le réseau sans fil peut être configuré pour communiquer avec l'ordinateur (C) situé au sol par l'intermédiaire notamment des moyens de communication nominaux du satellite (1).

4. Système selon l'une quelconque des revendications précédentes, **caractérisé en ce que** ledit réseau sans fil comprend des moyens pour l'activer et le désactiver électriquement.

5. Système selon la revendication 4, **caractérisé en ce que** ledit réseau sans fil comprend des moyens pour l'activer et le désactiver à distance, lesdits équipements spatiaux étant au sol au sein d'un satellite, par exemple en phase de test.

6. Système selon la revendication 4, **caractérisé en ce que** ledit réseau sans fil comprend des moyens pour l'activer et le désactiver à distance, lesdits équipements spatiaux étant en vol au sein d'un satellite en orbite.

7. Système selon l'une quelconque des revendications précédentes, **caractérisé en ce qu'**il comprend des moyens pour assurer l'une au moins des fonctions suivantes :
- l'aide à la détermination de l'état de chacun desdits équipements spatiaux,
- la mise à jour, chacun desdits équipements spatiaux présentant un procès verbal de recette, desdits procès verbaux de recettes,
- l'acquisition et l'enregistrement de pannes, alarmes ou événements survenus sur lesdits équipements spatiaux,
- le lancement de procédures d'autotests à distance sur lesdits équipements spatiaux,
- la lecture de données techniques relatives auxdits équipements spatiaux,
- la lecture de paramètres relatifs auxdits équipements spatiaux, enregistrés automatiquement,
- l'acquisition en temps réel de paramètres sur un ou des bus de données associés auxdits équipements spatiaux,
- l'aide au diagnostic en cas de dysfonctionnement d'un des équipements spatiaux au sol,
- l'aide au diagnostic en cas de dysfonctionnement d'un des équipements spatiaux en vol.

8. Système selon l'une quelconque des revendications 1 à 7, **caractérisé en ce que** des nœuds internes (IN1,IN2,IN3,IN4) correspondent aux blocs de communication sans fil internes (WI), et des nœuds d'interface (INT1,INT2,INT3,INT4), correspondent aux blocs de communication sans fil externes (WE), lesdits nœuds internes (IN1,IN2,IN3,IN4) et lesdits nœuds d'interface (INT1,INT2,INT3,INT4) étant respectivement associés aux coupleurs intelligents (CL,CLS), et lesdits nœuds d'interface (INT1,INT2,INT3,INT4) permettant la communication entre lesdits nœuds internes (IN1,IN2,IN3,IN4) et au moins un nœud externe (EN,ENP1,ENP2,ENP3,ENP4), fixe ou mobile par rapport auxdits nœuds internes (IN1,IN2,IN3,IN4).

## Patentansprüche

1. Kommunikationssystem für Satelliten-Weltraumausrüstungen, beinhaltend eine Vielzahl von Weltraumausrüstungen (E1, E2, E3, E4, E5, E6), welche mit operativen physischen Datenbussen (DB) für Datenkommunikationen zwischen den Weltraumausrüstungen während eines operativen Modus des Satelliten gekoppelt sind, wobei jede Weltraumausrüstung mindestens einen intelligenten Koppler (CL, CLS) beinhaltet, welcher drahtlose Kommunikationsblöcke beinhaltet, wobei der mindestens eine intelligente Koppler (CL, CLS) einen Prozessor, einen internen Speicher, einen Sende-/Empfangsschaltkreis und mindestens eine Hochfrequenzantenne beinhaltet, wobei der interne Speicher des intelligenten Kopplers (CL, CLS) zudem Mittel zur Programmierung beinhaltet, welche geeignet ist zum:
• automatischen Aufzeichnen von Parametern in Zusammenhang mit dem Betrieb der Weltraumausrüstungen, welchen sie zugeordnet sind,
• Speichern von technischen Daten in Zusammenhang mit den Weltraumausrüstungen, welchen die intelligenten Koppler (CL, CLS) zugeordnet sind,
• Speichern von auf Distanz ausführbaren Selbsttestverfahren in Zusammenhang mit den Weltraumausrüstungen, welchen die intelligenten Koppler (CL, CLS) zugeordnet sind,
wobei das System **dadurch gekennzeichnet ist, dass**:
- der jeder Weltraumausrüstung zugeordnete intelligente Koppler, je nach Einbauort der Ausrüstung in der Einhausung des Satelliten, entweder mit drahtlosen internen (WI) und externen Kommunikationsblöcken (WE) bei Ausrüstungen, die sich in unmittelbarer Nähe einer Wand des Satelliten befinden, oder mit drahtlosen internen Kommunikationsblöcken (WI) bei im Herzen des Satelliten befindlichen Ausrüstungen, kommuniziert;
- wobei die drahtlosen internen (WI) und externen Kommunikationsblöcke (WE) ein von den operativen physischen Datenbussen unterschiedliches drahtloses Netzwerk bilden, wobei das drahtlose Netzwerk aktivierbar oder deaktivierbar ist, um Kommunikationsfunktionen zwischen dem Außenbereich und dem Innenbereich des Satelliten zu bewerkstelligen, um Diagnosen am Boden und im Flug der Weltraumausrüstungen zu stellen oder Kommunikationsfunktionen innerhalb des Satelliten zu bewerkstelligen, um im Flug operative Daten zwischen der Vielzahl der Weltraumausrüstungen zu kommunizieren.

2. System nach Anspruch 1, Folgendes beinhaltend:
• mindestens einen Computer (C), welcher ein Laptop sein kann, ausgerüstet mit einer drahtlosen Kommunikationskarte, welche sich mit dem drahtlosen Netzwerk verbinden kann,
• mindestens eine auf dem Computer (C) installierte Software, welche Folgendes ermöglicht:
- den einzelnen Zugriff auf eine beliebige Weltraumausrüstung, um mindestens Informationen in Zusammenhang mit dem einwandfreien Betrieb der Weltraumausrüstung einzuholen; und
- den Zugriff auf das drahtlose Netzwerk, um mindestens Informationen in Zusammenhang mit dem Betrieb der Weltraumausrüstungen in nicht intrusiver Weise einzuholen.

3. System nach Anspruch 2, wobei der Satellit (1) nominale Boden-/Bord-Kommunikationsmittel beinhaltet und wobei der Satellit (1) sich im Flug befindet, **dadurch gekennzeichnet, dass** das drahtlose Netzwerk konfiguriert sein kann, um mit dem am Boden befindlichen Computer (C) insbesondere über nominale Kommunikationsmittel des Satelliten (1) zu kommunizieren.

4. System nach einem der vorhergehenden Ansprüche, **dadurch gekennzeichnet, dass** das drahtlose Netzwerk Mittel zu dessen elektrischer Aktivierung und Deaktivierung beinhaltet.

5. System nach Anspruch 4, **dadurch gekennzeichnet, dass** das drahtlose Netzwerk Mittel zu dessen Aktivierung und Deaktivierung auf Distanz beinhaltet, wobei die Weltraumausrüstungen sich am Boden innerhalb eines Satelliten befinden, beispielsweise in einer Testphase.

6. System nach Anspruch 4, **dadurch gekennzeichnet, dass** das drahtlose Netzwerk Mittel zu dessen Aktivierung und Deaktivierung auf Distanz beinhaltet, wobei die Weltraumausrüstungen sich im Flug innerhalb eines auf einer Umlaufbahn befindlichen Satelliten befinden.

7. System nach einem der vorhergehenden Ansprüche, **dadurch gekennzeichnet, dass** er Mittel zur Sicherstellung mindestens einer der folgenden Funktionen beinhaltet:
- Hilfe bei der Bestimmung des Zustandes einer jeden der Weltraumausrüstungen,
- Aktualisierung, da jede der Weltraumausrüstungen ein Abnahmeprüfungsprotokoll aufweist, der Abnahmeprüfungsprotokolle,
- Erfassung und Aufzeichnung von Pannen, Alarmmeldungen oder Ereignissen, welche an den Weltraumausrüstungen aufgetreten sind,
- Initialisierung von Selbsttestverfahren auf Distanz an den Weltraumausrüstungen,
- Lektüre der technischen Daten in Zusammenhang mit den Weltraumausrüstungen,
- Lektüre der Parameter in Zusammenhang mit den Weltraumausrüstungen, welche automatisch aufgezeichnet wurden,
- Echtzeiterfassung von Parametern an einem oder mehreren Datenbussen, welche den Weltraumausrüstungen zugeordnet sind,
- Hilfe bei der Diagnose, im Fall von Funktionsstörungen, einer der Weltraumausrüstungen am Boden,
- Hilfe bei der Diagnose, im Fall von Funktionsstörungen, einer der Weltraumausrüstungen im Flug.

8. System nach einem der Ansprüche 1 bis 7, **dadurch gekennzeichnet, dass** interne Knoten (IN1, IN2, IN3, IN4) den internen drahtlosen Kommunikationsblöcken (WI) entsprechen, und dass Schnittstellenknoten (INT1, INT2, INT3, INT4) den externen drahtlosen Kommunikationsblöcken (WE) entsprechen, wobei die internen Knoten (IN1, IN2, IN3, IN4) und die Schnittstellenknoten (INT1, INT2, INT3, INT4) beziehungsweise den intelligenten Kopplern (CL, CLS) zugeordnet sind, und wobei die Schnittstellenknoten (INT1, INT2, INT3, INT4) die Kommunikation zwischen den internen Knoten (IN1, IN2, IN3, IN4) und mindestens einem externen Knoten (EN, ENP1, ENP2, ENP3, ENP4) ermöglichen, welcher fix oder beweglich in Bezug auf die internen Knoten (IN1, IN2, IN3, IN4) ist.

## Claims

1. Communication system for satellite space equipment items comprising a plurality of space equipment items (E1, E2, E3, E4, E5, E6) coupled to operational physical data buses (DB) for data communications between space equipment items during a satellite operating mode, each space equipment item comprising at least one smart coupler (CL, CLS) comprising wireless communication blocks, said at least one smart coupler (CL, CLS) comprising a processor, an internal memory, a transmission/reception circuit and at least one high frequency antenna, said internal memory of said smart coupler (CL, CLS) furthermore comprising programming means suitable for:
• automatically saving parameters relating to the operation of the space equipment items with which they are associated,
• storing of technical data relating to the space equipment items with which said smart couplers (CL, CLS) are associated,
• storing self-test procedures relating to the space equipment items with which said smart couplers (CL, CLS) are associated and which can be executed remotely,
the system being **characterized in that**:
- the smart coupler associated with each equipment item communicates, according to the location of said equipment item in the satellite enclosure, either with internal (WI) and external (WE) wireless communication blocks for the equipment items which are in the immediate proximity of a wall of the satellite, or with internal wireless communication blocks (WI) for the equipment items which are at the core of the satellite;
- the internal (WI) and external (WE) wireless communication blocks forming a wireless network distinct from the operational physical data buses, said wireless network being able to be activated or deactivated to operate communication functions between the outside and the inside of the satellite to provide ground and inflight diagnostics of the space equipment items or operate communication functions within the satellite to communicate in flight operational data between the plurality of the space equipment items.

2. System according to claim 1, comprising:
• at least one computer (C), which can be a laptop computer, equipped with a wireless communication card, which can connect to said wireless network,
• at least one software installed on said computer (C), allowing:
- isolated access to any space equipment item, in order to at least collect information relating to the proper functioning of said space equipment items; and
- access to the wireless network, in order to at least collect information relating to the operation of said space equipment items, in a non-intrusive manner.

3. System according to claim 2, said satellite (1) comprising nominal ground/on-board communication means and said satellite (1) being in flight, **characterized in that** the wireless network can be configured to communicate with the computer (C) located on the ground by means, in particular, of the nominal communication means of the satellite (1).

4. System according to any one of the preceding claims, **characterized in that** said wireless network comprises means for activating and deactivating it electrically.

5. System according to claim 4, **characterized in that** said wireless network comprises means for activating and deactivating it remotely, said space equipment items being on the ground within a satellite, for example in the test phase.

6. System according to claim 4, **characterized in that** said wireless network comprises means for activating and deactivating it remotely, said space equipment items being in flight within a satellite in orbit.

7. System according to any one of the preceding claims, **characterized in that** it comprises means for ensuring at least one of the following functions:
- assistance in determining the state of each of said space equipment items,
- updating, each of said space equipment items presenting an acceptance test report, said acceptance tests reports,
- acquiring and recording failures, alarms or events occurring on said space equipment items,
- launching self-test procedures remotely on said space equipment items,
- reading technical data relating to said space equipment items,
- reading parameters relating to said space equipment items, recorded automatically,
- acquiring in real-time parameters on one or more data buses associated with said space equipment items,
- providing diagnostic assistance in case of a malfunction of any space equipment items on the ground,
- providing diagnostic assistance in case of a malfunction of any space equipment items in flight.

8. The system as claimed in any one of claims 1 to 7, **characterized in that** internal nodes (IN1, IN2, IN3, IN4) correspond to the internal wireless communication blocks (WI), and interface nodes (INT1, INT2, INT3, INT4) correspond to the external wireless communication blocks (WE), said internal nodes (IN1, IN2, IN3, IN4) and said interface nodes (INT1, INT2, INT3, INT4) respectively being associated with the smart couplers (CL, CLS), and said interface nodes (INT1, INT2, INT3, INT4) enabling communication between said internal nodes (IN1, IN2, IN3, IN4) and at least one external node (EN, ENP1, ENP2, ENP3, ENP4), which is fixed or mobile relative to said internal nodes (IN1, IN2, IN3, IN4).
